# EUROPEAN PATENT SPECIFICATION

(11) **EP 2 750 455 B1**
(45) Date of publication and mention of the grant of the patent: **20.01.2016**
(21) Application number: 13184625.5
(22) Date of filing: 16.09.2013
(51) Int. Cl.: H04W 36/00

(54) **Packet-switched network return**
Paketvermittlungsnetzwerkrückkehr
Retour de réseau à commutation par paquets

(30) Priority: 28.12.2012 CN 201210587475; 28.12.2012 CN 201210587826; 28.12.2012 CN 201210587827; 28.12.2012 CN 201210587828; 25.02.2013 WO PCT/CN2013/071839
(43) Date of publication of application: 02.07.2014
(73) Proprietor: Spreadtrum Communications (Shanghai) Co., Ltd., Shanghai 201203 (CN)
(72) Inventor: Han, Wei, 201203 SHANGHAI (CN); Qian, Minqian, 201203 SHANGHAI (CN); Gao, Xichun, 201203 SHANGHAI (CN); Wei, Xia, 201203 SHANGHAI (CN); Shi, Yanshan, 201203 SHANGHAI (CN); Chen, Xianliang, 201203 SHANGHAI (CN)
(74) Representative: Eisenführ Speiser

(56) References cited:
- WO-A1-2011/096870
- HUAWEI ET AL: "How to return to LTE for CSFB", 3GPP DRAFT; S2-124296_HOW TO RETURN TO LTE FOR CSFB, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE , vol. SA WG2, no. New Orleans, USA; 20121112 - 20121116 6 November 2012 (2012-11-06), XP050683964, Retrieved from the Internet: URL:http://www.3gpp.org/ftp/tsg_sa/WG2_Arc h/TSGS2_94_New_Orleans/Docs/ [retrieved on 2012-11-06]
- ERICSSON ET AL: "Fast Return after CSFB", 3GPP DRAFT; S2-114580 WAS S2-114545 23272 FASTRETURN AFTER CSFB, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. SA WG2, no. Jeju Island; 20111010, 14 October 2011 (2011-10-14), XP050549734,

## Description

### BACKGROUND OF THE DISCLOSURE

Evolved Packet System may be considered a core network supporting the Long Term Evolution wireless mobile radio access technology. In general, circuit-switched fallback in Evolved Packet System enables the provisioning of circuit-switched-domain services (e.g., voice service) by reuse of circuit-switched infrastructure when requested by an appropriately configured mobile user equipment. For example, a particular user equipment configured to support Long Term Evolution and a Second Generation and/or Third Generation radio access technology may initiate, on a Long Term Evolution network, access to a particular circuit-switched service through circuit-switched fallback. The Long Term Evolution network may then redirect the user equipment to a particular Second Generation/Third Generation network for circuit-switched service. Following termination of circuit-switched service, the user equipment may return to the Long Term Evolution network independently through cell reselection, or return to the Long Term Evolution network directly based on instruction provided by the Second Generation/Third Generation network.

WO 2011/096870A1 discloses a device. The device receives a request for a service for a user equipment associated with a source radio access network, and establishes a connection with the user equipment via a circuit switched fallback procedure. The device also receives, from the source radio access network, information associated with one or more source cells, and provides the service to the user equipment through a target radio access network. The device further uses the information to select one of the one or more source cells for the user equipment to return after the service terminates, terminates the service, and returns the user equipment to the selected source cell. HUAWEI et al., "How to return to LTE for CSFB", 3GPP Doc. S2-124296, November 2012 discloses proposals to guarantee return back to LTE PLMN that formerly requests the CSFB call. A first proposal includes that during the release of an RR connection the MSC can also indicate to GERAN/UTRAN the serving LTE PLMN information. A second proposal includes that during the CSFB procedure, when indicating the Equivalent PLMN list to UE, the MSC/SGSN may take into account the serving LTE PLMN that the UE formerly requests the CSFB call. ERICSSON et al., "Fast Return after CSFB", 3GPP Doc. S2-11458, October 2011 discloses returning back to E-UTRAN. Once CS service ends in CS domain, existing mechanisms can be used to move the UE to E-UTRAN, no specific CS Fallback mechanisms are needed. During the release of an RR connection the MSC should indicate to GERAN/UTRAN that the RR connection was established as a result of CS fallback. GERAN and UTRAN may use the indication to determine which of the existing mechanisms that should be used to move the UE to E-UTRAN.

### SUMMARY

This Summary does not in any way limit the scope of the claimed subject matter.

In an aspect, a method for generating a Long Term Evolution (LTE) network return procedure is disclosed. The method includes initiating, by a mobile terminal, connection of the mobile terminal to an LTE network. The method further includes receiving, by the mobile terminal from the LTE network, at least one of a first listing and a second listing, the first listing specifying a network-wide selection of LTE network access points, and the second listing specifying a set of LTE network access points of the first listing. The method further includes initiating, by the mobile terminal, connection of the mobile terminal to a circuit-switched network (CSN) for access to a particular circuit-switched service. The method further includes determining, by the mobile terminal while connected to the CSN, availability of a third listing of LTE network nodes supplied by the CSN. The method further includes measuring, by the mobile terminal while connected to the CSN, signal strength of at least one LTE network access point selected from one of the first listing, the second listing, and the third listing. The method further includes initiating disconnection of the mobile terminal from the CSN for discontinued access to the particular circuit-switched service. The method further includes generating, by the mobile terminal in absence of redirection instruction from the CSN, a packet-switched network return procedure that, when instantiated by the mobile terminal, implements connection of the mobile terminal to the LTE network based on the measured signal strength of the at least one LTE network access point.

In another aspect, a multi-mode mobile user equipment for generating a Long Term Evolution (LTE) network return procedure is disclosed. The multi-mode mobile user equipment includes means for initiating connection of the multi-mode mobile user equipment to the LTE network. The multi-mode mobile user equipment further includes means for receiving, from the LTE network, at least one of a first listing and a second listing, the first listing specifying a network-wide selection of LTE network access points, and the second listing specifying a set of LTE network access points of the first listing. The multi-mode mobile user equipment further includes means for initiating connection of the multi-mode mobile user equipment to a circuit-switched network (CSN) for access to a particular circuit-switched service. The multi-mode mobile user equipment further includes means for determining, while connected to the CSN, availability of a third listing of LTE network access points supplied by the CSN. The multimode mobile user equipment further includes means for measuring, while connected to the CSN, signal strength of at least one LTE network access point selected from one of the first listing, the second listing, and the third listing. The multi-mode mobile user equipment further includes means for generating, in absence of redirection instruction from the CSN, a packet-switched network return procedure that, when instantiated by the multi-mode mobile user equipment, implements connection of the multi-mode mobile user equipment to the LTE network based on the measured signal strength of the at least one LTE network access point.

### BRIEF DESCRIPTION OF THE DRAWINGS

A further understanding of the nature and advantages of the present invention may be realized by reference to the remaining portions of the specification, and the drawings, wherein like reference numerals are used throughout to refer to similar components. In some instances, a sub-label may be associated with a reference numeral to denote one of multiple similar components. When reference is made to a reference numeral without specification to an existing sub-label, it is intended to refer to all such multiple similar components.
**FIG.** 1 shows a first example method for implementing a packet-switched network return procedure in accordance with the present disclosure.
**FIG. 2** shows a block diagram of an example EPS architecture for packet-switched network return is shown in accordance with the present disclosure.
**FIG. 3** shows the relationship between example LTE Cell Lists and geographic location of a multi-mode mobile user equipment in accordance with the present disclosure.
**FIG. 4** shows a second example method for implementing a packet-switched network return procedure in accordance with the present disclosure.
**FIG. 5** shows an example computing system or device.

### DETAILED DESCRIPTION OF THE DISCLOSURE

UMTS (Universal Mobile Telecommunication System) is a 3G (Third Generation) wireless telecommunication network technology standard organized and defined by the 3GPP (Third Generation Partnership Project). In general, a UMTS network is composed of a core network and an access network, where the core network may comprise of a CS (Circuit-Switched) domain and a PS (Packet-Switched) domain. The CS domain provides CS-based services, such as voice service, while the PS domain offers PS-based service, such as Internet access. The 3GPP further organizes, maintains, or formulates 2G (Second Generation) standards such as GSM (Global System for Mobile Communications), GPRS (General packet radio service), EDGE (Enhanced Data rates for GSM Evolution), as well as 3G standards such as W-CDMA (Wideband Code Division Multiple Access) and TD-SCDMA (Time Division Synchronous Code Division Multiple Access). The 3G standard CDMA2000 (Code Division Multiple Access) is generally organized and defined by the 3GPP2 (Third Generation Partnership Project 2).

LTE (Long Term Evolution) is a standard for wireless data communications technology, and supports both TDD (Time-Division Duplexing) and FDD (Frequency Division Duplexing). Among 3GPP standard operations, LTE is directed towards access network evolution, while SAE (System Architecture Evolved) is directed towards core network evolution. Both LTE and SAE, however, focus on optimization of PS domain service, as opposed to a combined PS domain service and CS domain service model. For example, in LTE, traditional CS domain voice service is not supported. Instead, voice service(s) may be provided via alternate methods such as, for example, VoLTE (Voice Over LTE), SVLTE (Simultaneous Voice and LTE), and CSFB (Circuit-Switched Fallback). For most application and purposes, LTE networks are packet switch network (PSN) only, without the implementation of circuit switch network (CSN). In contrast, depending on the application and specific implementations thereof, 3G and/or 2G network comprises CSN and/or PSN. For example, a 3G network may use CSN for voice and PSN for data. In this manner, an LTE network may be considered a packet-switched network; whereas a 2G/3G network may be considered a hybrid of a packet-switched network and a circuit-switched network.

In the example of CSFB, a particular mobile UE (User Equipment) configured to support both LTE and a 2G and/or 3G RAT (Radio Access Technology) may initiate, on an LTE network, access to a particular CS service through CSFB. The LTE network may then redirect the UE to a particular 2G/3G network for CS service. Following termination of CS service, the UE may return to the LTE network independently through "Cell Reselection" or "Fast Return." In Cell Reselection, the UE itself may perform LTE cell reselection based on particular LTE access point requirements or specifications. In Fast Return, the particular 2G/3G network may release target LTE neighbor cell information through a Channel Release message or RRC (Radio Resource Control) Connection Release redirection message to direct the UE to return to the LTE network. In Fast Return, 2G/3G network may direct the UE to the 3G/2G network as well. The UE does not return to the LTE network independently in Fast Return. Rather, it does so based on instruction from the particular 2G/3G network.

Cell Reselection mode and Fast Return mode may each have certain drawbacks. For example, Cell Reselection may be considered to be relatively "slow," as this implementation may require measurement and assessment by the UE of a number of different LTE access points. In Cell Reselection, an end user may experience an undesired, relatively "long" time delay while the UE transitions from a 2G/3G network connection back to an LTE network connection. In a Fast Return implementation, an end user may not experience a relatively "long" time delay while the UE transitions from a 2G/3G network connection back to an LTE network connection.

However, Fast Return may not necessarily be supported by a particular existing 2G/3G network architecture and, in order to realize benefits offered by Fast Return, an "expensive" upgrade of an existing 2G/3G network architecture may be required. For Fast Return to an LTE network, there are at least three cases lead to drawbacks; a) Fast Return is not supported by a 2G/3G network; b) A 2G/3G network release wrong (that is, unsuitable) target LTE neighbor cell information to UE, leads to UE could not camp on the instructed target LTE access point because that the target is far away in fact, and its signal strength is weak indeed. So the unsuitable configuration of target LTE cell information lead to a failure try of UE to camp on an LTE network; and c) A 2G/3G network release wrong (that is, unsuitable) target network, such as a neighbor cell information of a 3G/2G network, to UE.

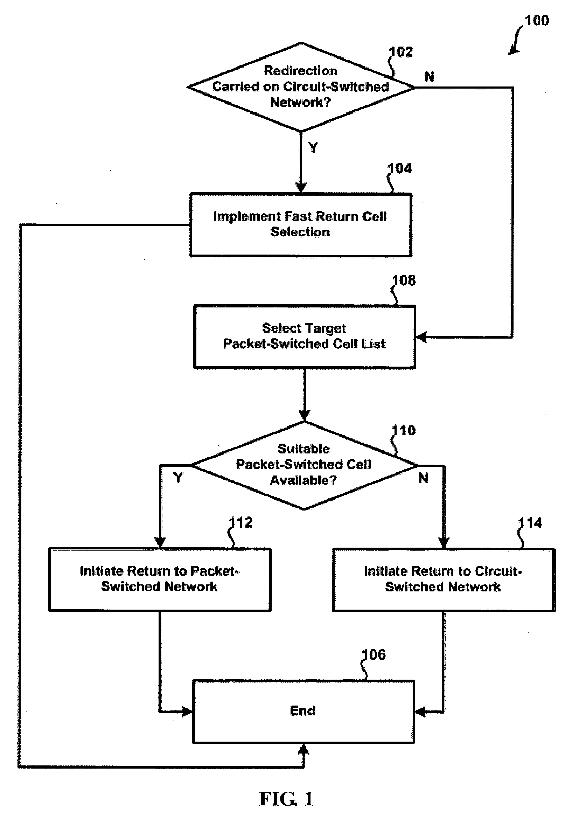

Conventionally, under the condition of the above three cases, Cell Reselection is implemented by a particular UE to reconnect with an LTE network. However, such an implementation may be undesirable at least for the foregoing reasons. The present disclosure addresses these and other issues by providing systems and methods to "actively" return to LTE under the condition of the above three cases by a particular existing 2G/3G network architecture. For example, referring now to **FIG. 1**, a first example method **100** for implementing a packet-switched network return procedure is shown in accordance with the present disclosure. In general, the example method **100** may be wholly or at least partially implemented by a special-purpose computing system or device, which itself may, in some embodiments, be configured based on implementation-specific requirements or specifications. An example of such a computing system or device may include a mobile multi-mode user equipment or terminal, such as described in detail throughout.

At operation **102**, a determination may be made as to whether Fast Return is supported by a particular existing 2G/3G network architecture, a 2G/3G network release wrong (that is, unsuitable) target LTE neighbor cell information to UE, leads to UE could not camp on the instructed target LTE access point because that the target is far away in fact, and its signal strength is weak indeed. So the unsuitable configuration of target LTE cell information lead to a failure try of UE to camp on an LTE network, or a 2G/3G network release wrong (that is, unsuitable) target network, such as a neighbor cell information of a 3G/2G network, to UE. In this example, a particular UE may have been previously residing on (e.g., "camped-on") a particular cell of an LTE network and then, following a CSFB procedure, the UE may be presently residing on a particular cell of a 2G/3G network accessing a circuit-switched service, such as a voice service. In general, the UE may camp-on an LTE network for many reasons. For example, there may only be an LTE network available, so the UE selects LTE (idle state). In another example, the LTE network is "better," so the UE reselects to LTE from 2G/3G (idle state). In another example, the UE needs "high" data rate PS service (active state).

Following or during termination of the circuit-switched service, the 2G/3G network may release LTE neighbor cell information of the LTE network through a Channel Release message, or RRC (Radio Resource Control) Connection Release redirection message, to direct the UE to return to the LTE network. In such a scenario, process flow may proceed to operation **104** whereby the UE may initiate a "Fast Return" LTE cell selection based on instruction(s) provided by the 2G/3G network. Subsequently, process flow within the example method **100** may proceed to termination at operation **106,** corresponding to the UE residing on a particular cell of the LTE network. Such an implementation as described in connection with operations **102, 104,** and **106** may beneficial in many respects. For example, it may be desirable for an end user to experience benefits offered by "Fast Return" LTE cell selection when available.

In instances where the 2G/3G network does not release LTE neighbor cell information through a Channel Release message or RRC (Radio Resource Control) Connection Release redirection message, process flow may proceed to operation **108.** At operation **108**, the UE may begin a procedure that when implemented identifies a "preferred" LTE cell of the LTE network to establish connection thereto. This may be performed in order to establish reconnection (e.g., "reconnection" because the UE was previously connected to the LTE network at operation **102**) of the UE with the LTE network following termination of CS service. Such a procedure may be referred to as "packet-switched network return." For example, at operation **108**, the UE may select a "preferred" target cell list from among a number of different lists, each specifying particular ones of a plurality of potential LTE access points by which reconnection of the UE with the LTE network may be realized.

One example of a "target cell list" may be referred to as a "Network LTE Cell List." This list may substantially identify or specify each discoverable LTE access point across the LTE network in its entirety. In this manner, the Network LTE Cell List may be understood to be a "global" list. In general, the Network LTE Cell List may be "broadcast" to the UE at a time at which the UE is connected to the LTE network.

Another example of a "target cell list" may be referred to as a "Local LTE Cell List." For example, in LTE specifications defined by 3GPP, the Local LTE Cell List is described by "MeasObjectEUTRA" information element. This list may identify or specify a set (or subset) of the LTE access points of the Network LTE Cell List. Similar to the Network LTE Cell List, the Local LTE Cell List may be "broadcast" to the UE at a time at which the UE is connected to the LTE network. In this example, LTE access points specified within the Local LTE Cell List may each be associated with a geographic location of the UE at a time when the UE is connected to the LTE network. In this manner, the Local LTE Cell List may be understood to be a "localized" list that reflects physical location of the UE at a particular point in time.

Another example of a "target cell list" may be referred to as a "Return LTE Cell List." For example, in 3G specifications defined by 3GPP, the Return LTE Cell List is described by "E-UTRA frequency list" and "E-UTRA frequency and priority info list" information element; in 2G specifications defined by 3GPP, the Return LTE Cell List is described by "E-UTRAN Parameters Description" information element. Similar to the Local LTE Cell List, the Return LTE Cell List may identify or specify a set (or subset) of the LTE access points of the Network LTE Cell List. The Return LTE Cell List, however, may be "broadcast" to the UE at a time at which the UE is connected to a particular 2G/3G network while, for example, the UE is accessing a particular circuit-switched service and received a Measurement Control message, or the UE receives the system information including LTE neighbor cell information broadcasted by 2G/3G network. In this example, consider two network operators, A and B. A&B all operate LTE networks, and A operates 2G/3G network also. So when UE CSFB to 2G/3G of A, the 2G/3G may broadcast or release the Return LTE Cell List of LTE of both A LTE & B LTE. And list of B LTE maybe not a subset of first listing of A LTE network. Additionally, in this example, LTE access points specified within the Return LTE Cell List may each be associated with a geographic location of the UE at a time when the UE is connected to the 2G/3G network. In this manner, the Return LTE Cell List may be understood to be a "localized" list that is more "up-to-date" than the Local LTE Cell List. This is because the UE may potentially change physical location between a time that the UE receives the Local LTE Cell List (e.g., while "camped-on" a particular LTE cell at operation **102**), and a time that the UE receives the Return LTE Cell List (e.g., while "camped-on" a particular 2G/3G cell at operation **102, 108,** etc.).

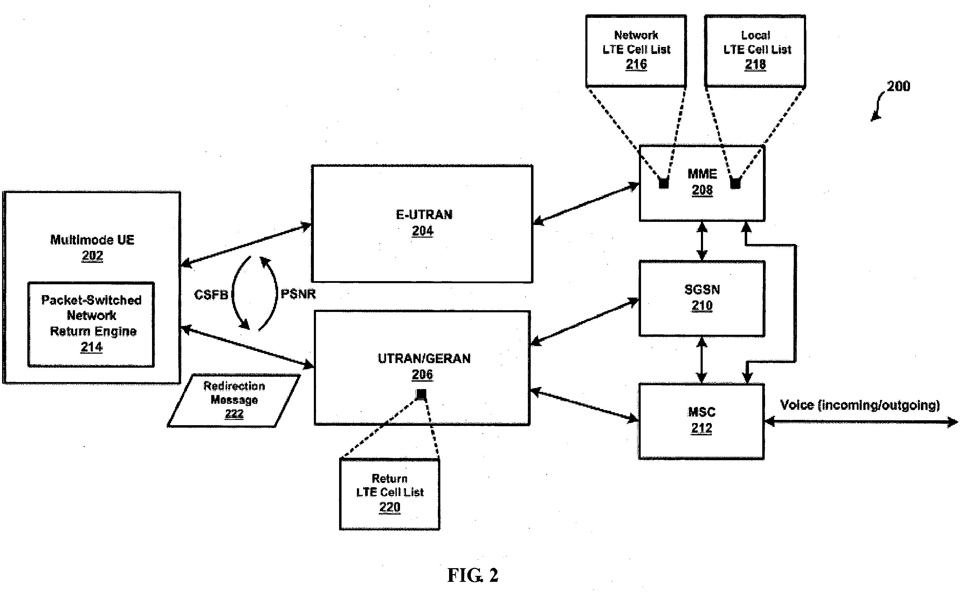

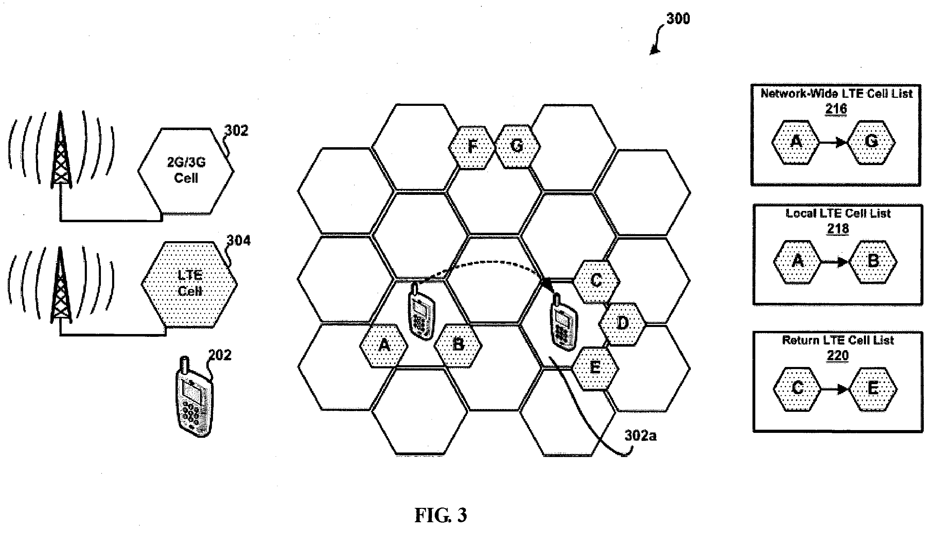

The Network LTE Cell List, Local LTE Cell List, and the Return LTE Cell List are described in further detail below at least in connection with **FIG. 2** and **FIG. 3**. In general, the Network LTE Cell List, Local LTE Cell List, and Return LTE Cell List may be received and stored on a particular UE. In other examples, one or more of the Network LTE Cell List, Local LTE Cell List, and Return LTE Cell List may be unavailable, and may not be received and stored on a particular UE.

Selection of a preferred target cell list from among the number of different lists at operation **108** may be implemented by the UE in accordance with one or more criteria. In general, a "preferred" target cell list is selected by the UE because the UE may be required to measure or otherwise quantify signal strength of particular LTE access points. Such an implementation be wasteful in terms of power consumption when performed across multiple LTE cell lists. In particular, it may be preferable to measure or otherwise quantify signal strength of LTE access points within only one of a plurality of LTE Cell Lists. In this example, a "priority" may be established where the Return LTE Cell is preferable to the Network-Wide LTE Cell List, and the Network LTE Cell List is preferable to the Local LTE Cell List. Accordingly, when all three of these lists are available, the Return LTE Cell may be selected by the UE as a preferred target cell list at operation **108**. Alternatively, when the Return LTE Cell is unavailable, but the Network LTE Cell List and the Local LTE Cell List are available, the Network LTE Cell List may be selected by the UE as a preferred target cell list at operation **108**. Alternatively, when the Return LTE Cell and the Network LTE Cell List are unavailable, but the Local LTE Cell List is available, the Local LTE Cell List may be selected by the UE as a preferred target cell list at operation **108**. Still other embodiments are possible. It should also be noted that if the UE handover is from cell to cell, it is permissible to select the Network LTE Cell List; however, if the UE remains in the same cell for which it fallback, the Local LTE list is preferred.

For example, other variations in "priority" may be established. For example, in instances wherein the Return LTE Cell List was previously available, but is no longer available, such as may occur upon intra/inter-system handover from a particular cell configured to broadcast a Return LTE Cell List to a particular cell not configured to send a Return LTE Cell List, a priority may be established where the Network LTE Cell List is preferable to the Local LTE Cell List. Another priority may optionally, or alternatively, be established where an available Return LTE Cell List may be preferable to the Network LTE Cell List, even when a Return LTE Cell List was (is) not broadcast by a "current" cell, and the Network LTE Cell List may be preferable to the Local LTE Cell List.

Still other embodiments are possible in selection of a "preferred" target cell list from among a number of different LTE cell lists at operation **108**. For example, a validity test may be performed by the UE to further optimize and determine whether the Return LTE Cell, Network LTE Cell List, and the Local LTE Cell List are valid. Following determination of validity, a preferred target cell list may be selected by the UE according to the above-mentioned priority criteria. For example, the Return LTE Cell, Network LTE Cell List, and the Local LTE Cell List may be evaluated as valid or invalid in accordance with change of LAI (Location Area Identity), RAI (Routing Area Identity), and/or CID (Cell Identification). In this manner, physical movement or displacement of the UE may be more fully considered. For example, in instances where CID does not change, the Return LTE Cell, Network LTE Cell List, and the Local LTE Cell List may each be considered valid. In this example, a priority may then be established where the Return LTE Cell may be preferable to the Local LTE Cell List, and the Local LTE Cell List may be preferable to the Network LTE Cell List. Other embodiments are possible.

In example instances where CID changes, but LAI does not change, the Network LTE Cell List may be considered valid; if the UE received a Return LTE Cell List from the serving access point, such as Base Station, or Node B, the Return LTE Cell List may be considered valid. In this example, a priority may then be established where the Return LTE Cell List received from the serving access point is preferable, and the Network LTE Cell List is preferable if no Return LTE Cell List received from the serving access point, and then Local LTE Cell List are disregarded. In example instances where both LAI and RAI change, the Network LTE Cell List and the Local LTE Cell List may be considered invalid. In this example, a priority may then be established where the Return LTE Cell List may be preferable, and the Network LTE Cell List and the Local LTE Cell List may be disregarded. Still other actions may further be taken based on physical movement or displacement of the UE. For example, the Local LTE Cell List may no longer be stored by the UE upon change in LAI. Additionally, or alternatively, when the Return LTE Cell List is unavailable for a "prior" cell when LAI and RAI change, the UE may be configured to enter Cell Reselection mode, effectively exiting from the example method **100**. Still other embodiments are possible in selection of a preferred target cell list from among the number of different lists at operation **108**.

At operation **110**, the UE may determine whether a "suitable" LTE access point as listed within the "preferred" target cell list selected at operation **108** is available, such that reconnection of the UE with the LTE network may be realized. In this example, the UE may make such a determination by first measuring signal strength of each LTE access point listed within the selected target cell list, and then comparing each respective measured signal strength(s) against a cell reselection threshold or other preset power threshold. In this example, a particular "suitable" LTE access point with a "strongest" signal at least greater than the cell reselection threshold or other preset power threshold may be selected as a "suitable" LTE access point. For example, assuming that there are three (3) LTE access points identified as a having a signal strength at least greater than the cell reselection threshold or other preset power threshold, a particular one (1) of the three (3) LTE access points with the "strongest" signal may be selected as a "suitable" LTE access point. In this example, process flow may proceed to operation **112** at which the UE may initiate reconnection of the UE with the LTE network in a "packet-switched network return" implementation according the principles of the present disclosure. Subsequently, process flow within the example method **100** may proceed to termination at operation 106, corresponding to the UE residing on a particular cell of the LTE network.

In instances where the UE determines that a "suitable" LTE access point as listed within the "preferred" target cell list selected at operation **108** is not available, process flow within the example method **100** may proceed to operation **114**. At operation **114**, the UE may initiate connection of the UE with a particular 2G/3G network in a "circuit-switched network return" implementation according the principles of the present disclosure. Selection of the 2G/3G network at operation **114** may be implemented in accordance with particular criteria. For example, a "priority" may be established where the UE resides in the system accepting service when CS service is ended, that is, the UE may "camp-on" a 2G cell in a 2G system when CS service is ended in the 2G system, or the UE may "camp-on" a 3G cell in a 3G system when CS service is ended in the 3G system. In another example, the UE may preferentially attempt to "camp-on" a 2G cell in a 2G system. Such an implementation may be beneficial in many respects. For example, a 2G system generally has better coverage area than a 3G system. In another example, the UE may preferentially attempt to "camp-on" a 3G cell in a 3G system. Such an implementation may be beneficial in many respects. For example, a 3G system generally has higher data rates than a 2G system. Following connection of the UE with the 2G/3G network at operation **114**, process flow within the example method **100** may proceed to termination at operation **106**, corresponding to the UE residing on a particular cell of the 2G/3G network.

Further scenarios and beneficial aspects associated with implementing packet-switched network return in accordance with the present disclosure are described below in connection with **FIGS. 2-5**.

For example, referring now to **FIG. 2**, a block diagram **200** of an example EPS architecture for packet-switched network return is shown. For brevity, the example block diagram **200** is depicted in a simplified and conceptual form, and may generally include more or fewer systems, devices, networks, and/or other components as desired. Further, number and type of features or elements incorporated within the block diagram **200** may or may not be implementation-specific. Still further, while certain connections are shown between respective features or elements within the block diagram **200**, other additional or alternative connections are possible. An example of an EPS architecture consistent with the architecture shown in **FIG. 2** may be found within the *3rd Generation Partnership Project; Technical Specification Group Services and System Aspects; Circuit Switched (CS) fallback in Evolved Packet System (EPS); Stage 2 (Release 11)* (3GPP TS 23.272 V11.2.0 2012-09) specification.

In the present example, the block diagram **200** illustrates a multi-mode UE **202**, a E-UTRAN (Evolved UMTS Terrestrial Radio Access Network) **204**, a UTRAN/GERAN (UMTS Terrestrial Radio Access Network/GSM EDGE Radio Access Network) **206**, at least one MME (Mobile Management Entity) **208**, at least one SGSN (Serving GPRS Support Node) **210**, and at least one MSC (Mobile Switching Center) **212**. The example UE **202** includes a PS network return engine **214** configured to implement aspects of PSNR (Packet-switched Network Return) in accordance with the present disclosure. The example UE **202** may correspond to the UE described above in connection with **FIG. 1**. However, other embodiment are possible. The example MME **208** includes a Network LTE Cell List **216** and a Local LTE Cell List **218**. The example UTRAN/GERAN **206** includes a Return LTE Cell List **220**. The example Network LTE Cell List **216**, Local LTE Cell List **218**, and Return LTE Cell List **220** may correspond to similarly named elements described above in connection with **FIG. 1**. However, other embodiment are possible. Although not explicitly shown in **FIG. 2**, one or more of the Network LTE Cell List **216**, Local LTE Cell List **218**, and the Return LTE Cell List **220** may be housed wholly or at least partially on one or more different components of the example block diagram **200**. For example, in some embodiments, the Network LTE Cell List **216** may be wholly or at least partially stored on the E-UTRAN **204**. Still other embodiments are possible.

In practice, the MME **208** serves the UE **202** via the E-UTRAN **204** when in LTE access mode, and the SGSN **210** serves the UE **202** via the UTRAN/GERAN **206** when in 2G/3G access mode, for data services. The MSC **212** serves the UE **202** via the UTRAN/GERAN **206** when in 2G/3G access mode, for voice services. In the example of CSFB, one or both of the MME **208** and the MSC **212** may be configured to coordinate redirection of the UE **202** to the UTRAN/GERAN **206** for CS service upon the UE **202** initiating connection based upon, for example, one of a mobile originating call and a mobile terminating call. In the example of PSNR, one or both of the MME **208** and the MSC **212** may be configured to coordinate redirection of the UE **202** to the E-UTRAN **204** upon the UE **202** initiating termination of a mobile originating call and a mobile terminating call.

For example, following or during termination of CS service, the UTRAN/GERAN **206** may release or otherwise broadcast cell information of the E-UTRAN **204** through a redirection message **222** to the UE **202** to return to the E-UTRAN **204**. In such a scenario, the engine **214** of the UE **202** may initiate a "Fast Return" LTE cell selection based on instruction(s) provided by the redirection message **222**. Subsequently, the UE **202** may reside on a particular cell of the E-UTRAN **204**. The redirection message **222** however may not be available to the engine **214** in all instances. In such scenarios, the engine **214** may initiate a procedure that when implemented identifies a "preferred" LTE cell of the E-UTRAN **204** to establish connection thereto, as part of a PSNR process according to the principles of the present disclosure. For example, the engine **214** may select a "preferred" target cell list from among the Network LTE Cell List **216**, Local LTE Cell List **218**, and the Return LTE Cell List **220**, determine whether a "suitable" LTE access point is available as specified within a selected target cell list, and, when available, initiate reconnection of the UE **202** with the E-UTRAN **204** in a manner such as described above in connection with **FIG. 1**.

Referring now additionally to **FIG. 3**, the relationship between example LTE Cell Lists and geographic location of a multi-mode mobile user equipment is shown in accordance with the present disclosure. In particular, a diagram **300** of **FIG. 3** shows overlap between legacy cells **302** of the example UTRAN/GERAN **206**, and LTE cells **304** of the example E-UTRAN **204** in relation to position of the UE **202**. In this example, the Network LTE Cell List **216** is shown to specify LTE cells "A-G." Here, it is assumed for simplicity that the LTE cells "A-G" correspond to each discoverable LTE access point across the E-UTRAN **204**. In this manner, the Network LTE Cell List **216** may be understood to be a "global" list. In general, the Network LTE Cell List **216** may be "broadcast" to the UE **202** at a time at which the UE **202** is connected to E-UTRAN **204**. However, other embodiments are possible. For example, the Network LTE Cell List **216** may be "broadcast" to the UE **202** at a time at which the UE **202** is connected to UTRAN/GERAN **206**.

In contrast to the Network LTE Cell List **216**, the Local LTE Cell List **218** is shown to specify a set (or subset) of the LTE cells "A-G" of the Network LTE Cell List **216**, namely, LTE cells "A-B." Similar to the Network LTE Cell List **216**, the Local LTE Cell List **218** may be "broadcast" to the UE **202** at a time at which the UE **202** is connected to E-UTRAN **204**. However, other embodiments are possible. In this example, LTE cells "A-B" as specified within the Local LTE Cell List **218** may each be associated with a geographic location of the UE **202** at a time when the UE **202** is connected to the E-UTRAN **204** such as, for example, when connected the E-UTRAN **204** via LTE cell "A." In this manner, the Local LTE Cell List **218** may be understood to be a "localized" list that reflects physical location of the UE **202** at a particular point in time.

The Return LTE Cell List **220** is shown to specify a set (or subset) of the LTE cells "A-G" of the Network LTE Cell List **216**, namely, LTE cells "C-E." The Return LTE Cell List **220** may be "broadcast" to the UE **202** at a time at which the UE **202** is connected to, for example a particular legacy cell **302a** while the UE **202** is accessing a particular circuit-switched service (e.g., voice service) of the UTRAN/GERAN **206**. In this example, LTE cells "C-E" as specified within the Return LTE Cell List **220** may each be associated with a geographic location of the UE **202** at a time when the UE **202** is connected to the UTRAN/GERAN **206** such as, for example, when connected to the legacy cell **302a**. In this manner, the Return LTE Cell List **220** may be understood to be a "localized" list that is more "up-to-date" than the Local LTE Cell List **218**. This is because, in the example scenario, the UE **202** has changed physical location between a time that the UE **202** receives the Local LTE Cell List **218** (e.g., while "camped-on" LTE cell "A"), and a time that the UE **202** receives Return LTE Cell List **220** (e.g., while "camped-on" the legacy cell **302a**). Other embodiments are possible.

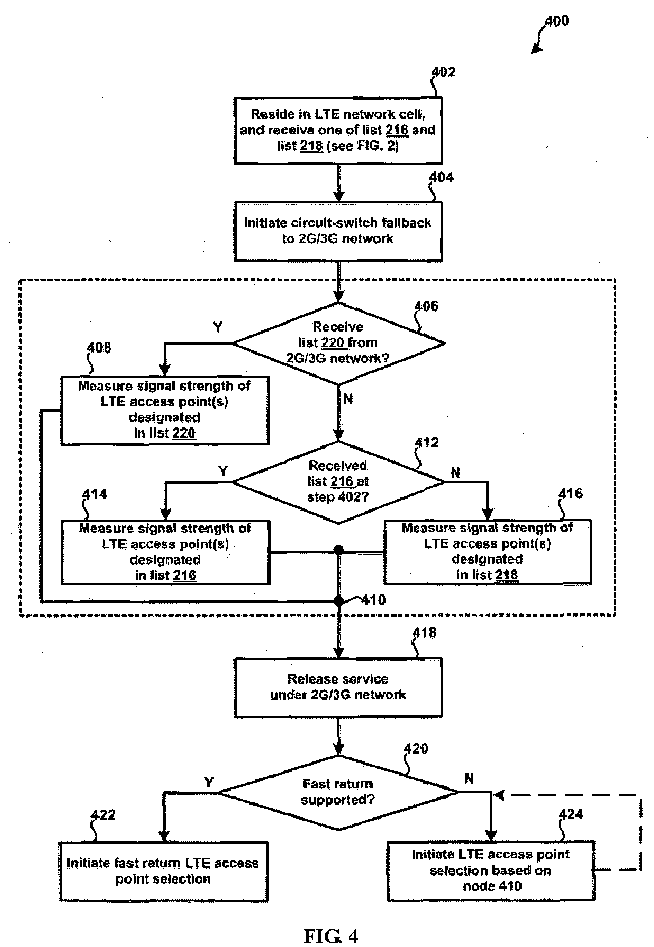

Referring now to **FIG. 4**, a second example method **400** for implementing a packet-switched network return procedure is shown in accordance with the present disclosure. In some embodiments, one or more operations of the example method **400** of **FIG. 4** may supplement or otherwise be incorporated within the example method **100** of **FIG. 1**, and vice versa. In general, the example method **400** may be wholly or at least partially implemented by a special-purpose computing system or device, which itself may, in some embodiments, be configured based on implementation-specific requirements or specifications. For example, the method **400** is described with reference to the UE **202**, along with other components of the example block diagram **200**, as described above in connection with **FIG. 2**. Other embodiments are possible.

At operation **402**, the UE **202** may "camp-on" a particular cell of the E-UTRAN **204**, and receive and store from the E-UTRAN **204** (e.g., MME **208**) at least one of the Network LTE Cell List **216** and the Local LTE Cell List **218**. In one embodiment, the UE **202** may initiate connection to the E-UTRAN **204** upon a power-on event of the UE **202**. Additionally, the UE **202** may enter into an operating state selected from an idle mode and active mode at or during operation **402**. In general, idle mode may correspond to a state by which a reduced amount of resources are allocated to communication with the E-UTRAN **204**, as compared to active mode. Other embodiments are possible.

At operation **404**, the UE **202** may initiate a CSFB procedure based upon one of a mobile originating call and a mobile terminating call. In general, one or both of the MME **208** and the MSC **212** may be configured to coordinate redirection of the UE **202** to the UTRAN/GERAN **206** for CS service associated with the voice call. Upon completion of operation **404**, the UE **202** may "camp-on" a particular cell of the UTRAN/GERAN **206**, and may receive and store from the UTRAN/GERAN **206** (e.g., MSC **212**) the Return LTE Cell List **220**.

At operation **406**, a determination may be made as to whether the Return LTE Cell List **220** is received from UTRAN/GERAN **206** and stored by the UE **202** at operation **404**. Flow may branch to operation **408** upon determination that the Return LTE Cell List **220** is received and stored at operation **406**. At operation **408**, the UE **202** may measure and store signal strength of all LTE access points specified within the Return LTE Cell List **220**. Flow may then branch to node **410**, discussed in further detail below.

Returning to operation **406**, flow may branch to operation **412** upon determination that the Return LTE Cell List **220** is not received and stored at operation **406**. At operation **412**, a determination may be made as to whether the Network LTE Cell List **216** was received from E-UTRAN **204** at operation **402**. Flow may branch to operation **414** upon determination that the Network LTE Cell List **216** was received from E-UTRAN **204** at operation **402**. At operation **414**, the UE **202** may measure and store signal strength of all LTE access points specified within the Network LTE Cell List **216**. Flow may then branch to node **410**, discussed further below.

Returning to operation **412**, flow may branch to operation **416** upon determination that the Network LTE Cell List **216** was not received from the E-UTRAN **204** at operation **402**. At operation **416**, the UE 202 may measure and store signal strength of all LTE access points specified within the Local LTE Cell List **218**. Flow may then branch to node **410**.

At node **410**, it may be understood that the UE **202** has measured and stored signal strength of all LTE access points specified within, in order of preference, one of the Return LTE Cell List **220**, the Network LTE Cell List **216**, and the Local LTE Cell List **218**. In this manner, the example method **400** of **FIG. 4** implements a "preferred" target cell list selection in accordance with the present disclosure. Additionally, flow within the method **400** between operation **406** through operation **416** (indicated by intermittent line in **FIG. 4**) may be considered as a continuous, cyclical process, having a duration anywhere on the order of, for example, seconds to hours. In this manner, determination(s) made at operation **406** and/or operation **408** may change, for example, upon intra/inter-system handover of the UE **202** between particular cells of a particular RAT.

Flow within the method **400** may then proceed to operation **418**. At operation **418**, the UE **202** may be released from CS service as provided by the UTRAN/GERAN **206**. Alternatively, if a radio link failure occurs (*e.g*., during CS voice call, the signal of 2G/3G network lost suddenly for about 160 milliseconds, or longer time), this could lead to the end of the CS service, and so there is normally no redirection message from 2G/3G network, even if the network supports Fast return. In further embodiments, following or during termination of CS service, the UTRAN/GERAN **206** may release or otherwise broadcast cell information of the E-UTRAN **204** through the redirection message **222** to the UE **202**. Next, at operation **420**, a determination may be made as to whether the redirection message **222** was received and stored by UE **202** at operation **418**.

Flow may branch to operation **422** upon determination that the redirection message **222** was received and stored at operation **418**. At operation **422**, the UE **202** (e.g., the engine **214**) may initiate a "Fast Return" LTE cell selection based on instruction(s) provided within the redirection message **222**. The redirection message **222** however may not be available in all instances. In such a scenario, flow may branch from operation **420** to operation **424** upon determination that the redirection message **222** was not received and stored at operation **418**. At operation **424**, the UE **202** may initiate a procedure to select and camp-on an LTE access point that when implemented identifies whether a "suitable" LTE access point is available from the LTE access points specified at node **410**. A particular LTE access point may be determined "suitable" upon a corresponding measured signal strength being at least greater than a cell reselection threshold or other preset power threshold, in a manner such as described above in connection with **FIGS. 1-3**. A "suitable" LTE access point may not be available at node **410** in all instances. For example, the UE **202** may have received a list of incorrect access points. In such a scenario, alternatively, at operation **424**, the UE **202** may also initiate a procedure to select and camp-on an LTE access point, after a procedure of search and measurement of an LTE network. Alternatively, if Fast Return fails in operation **422**, for example, when the UE **202** cannot camp-on the instructed target access point(s), the UE **202** may attempt at operation **424** again; or if the target of the Fast Return is 2G/3G, not LTE, configured in redirection message **222** if received and stored at operation **418**, flow may branch from operation **420** to operation **424** in such a scenario, that is the UE **202** may choose to refuse to return following the redirection message, and attempt operation **424** again.

The example method of **FIG. 4** may be beneficial in many respects. For example, when CSFB service is released from the UTRAN/GERAN **206**, the UE **202** may "actively" attempt to return to the E-UTRAN **204** when "Fast Return" is unavailable, as opposed to independently implementing "Cell Reselection." This may translate into a "higher" or "faster" acquisition of the E-UTRAN **204** by the US **202**, when compared to "Cell Reselection." However, the UE **202** may implement "Fast Return," when available, such that a user may experience benefits offered by "Fast Return" LTE cell selection.

Other benefits and/or advantages of the example method **400** of **FIG. 4** may be understood from the above-description provided in connection with **FIGS. 1-3**.

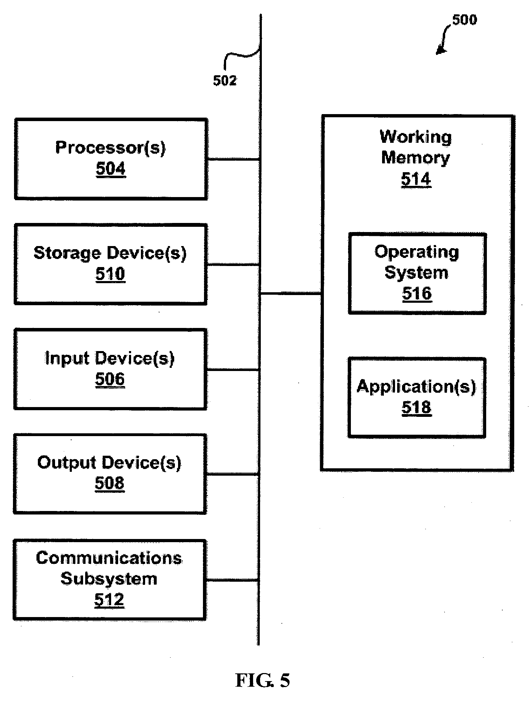

**FIG. 5** illustrates an embodiment of an example computer system/device 500. An example of a computer system or device includes a multi-mode mobile user equipment or terminal (e.g., a smartphone configured to access multiple RATs), a server computer, desktop computer, laptop computer, personal data assistant, gaming console, and others. The example computer device **500** may be configured to perform and/or include instructions that, when executed, cause the computer system **500** to perform the example method of **FIG. 1** and **FIG. 4**. It should be noted that **FIG. 5** is intended only to provide a generalized illustration of various components, any or all of which may be utilized as appropriate. **FIG. 5**, therefore, broadly illustrates how individual system elements may be implemented in a relatively separated or relatively more integrated manner.

The computer device **500** is shown comprising hardware elements that can be electrically coupled via a bus **502** (or may otherwise be in communication, as appropriate). The hardware elements may include a processing unit with one or more processors **504**, including without limitation one or more general-purpose processors and/or one or more special-purpose processors (such as digital signal processing chips, graphics acceleration processors, and/or the like); one or more input devices **506**, which can include without limitation a remote control, a mouse, a keyboard, and/or the like; and one or more output devices **508**, which can include without limitation a presentation device (e.g., television), a printer, and/or the like.

The computer system **500** may further include (and/or be in communication with) one or more non-transitory storage devices **510**, which can comprise, without limitation, local and/or network accessible storage, and/or can include, without limitation, a disk drive, a drive array, an optical storage device, a solid-state storage device, such as a random access memory ("RAM"), and/or a read-only memory ("ROM"), which can be programmable, flash-updateable, and/or the like. Such storage devices may be configured to implement any appropriate data stores, including without limitation, various file systems, database structures, and/or the like.

The computer device **500** might also include a communications subsystem **512**, which can include without limitation a modem, a network card (wireless or wired), an infrared communication device, a wireless communication device, and/or a chipset (such as a Bluetooth™ device, an 502.11 device, a WiFi device, a WiMax device, cellular communication facilities (e.g., GSM, WCDMA, LTE, etc.), and/or the like. The communications subsystem **512** may permit data to be exchanged with a network (such as the network described below, to name one example), other computer systems, and/or any other devices described herein. In many embodiments, the computer system **500** will further comprise a working memory **514**, which can include a RAM or ROM device, as described above.

The computer device **500** may also comprise software elements, shown as being currently located within the working memory **514**, including an operating system **516**, device drivers, executable libraries, and/or other code, such as one or more application programs **518**, which may comprise computer programs provided by various embodiments, and/or may be designed to implement methods, and/or configure systems, provided by other embodiments, as described herein. Merely by way of example, one or more procedures described with respect to the method(s) discussed above, and/or system components might be implemented as code and/or instructions executable by a computer (and/or a processor within a computer); in an aspect, then, such code and/or instructions can be used to configure and/or adapt a general purpose computer (or other device) to perform one or more operations in accordance with the described methods.

A set of these instructions and/or code might be stored on a non-transitory computer-readable storage medium, such as the storage device(s) **510** described above. In some cases, the storage medium may be incorporated within a computer system, such as computer system **500**. In other embodiments, the storage medium might be separate from a computer system (e.g., a removable medium, such as flash memory), and/or provided in an installation package, such that the storage medium can be used to program, configure, and/or adapt a general purpose computer with the instructions/code stored thereon. These instructions might take the form of executable code, which is executable by the computer device **500** and/or might take the form of source and/or installable code, which, upon compilation and/or installation on the computer system **500** (e.g., using any of a variety of generally available compilers, installation programs, compression/decompression utilities, etc.), then takes the form of executable code.

It will be apparent to those skilled in the art that substantial variations may be made in accordance with specific requirements. For example, customized hardware might also be used, and/or particular elements might be implemented in hardware, software (including portable software, such as applets, etc.), or both. Further, connection to other computing devices such as network input/output devices may be employed.

As mentioned above, in one aspect, some embodiments may employ a computer system (such as the computer device **500**) to perform methods in accordance with various embodiments of the invention. According to a set of embodiments, some or all of the procedures of such methods are performed by the computer system **500** in response to processor **504** executing one or more sequences of one or more instructions (which might be incorporated into the operating system **516** and/or other code, such as an application program **518**) contained in the working memory **514**. Such instructions may be read into the working memory **514** from another computer-readable medium, such as one or more of the storage device(s) **510**. Merely by way of example, execution of the sequences of instructions contained in the working memory **514** might cause the processor(s) **504** to perform one or more procedures of the methods described herein.

The terms "machine-readable medium" and "computer-readable medium," as used herein, refer to any medium that participates in providing data that causes a machine to operate in a specific fashion. In an embodiment implemented using the computer device **500**, various computer-readable media might be involved in providing instructions/code to processor(s) **504** for execution and/or might be used to store and/or carry such instructions/code. In many implementations, a computer-readable medium is a physical and/or tangible storage medium. Such a medium may take the form of a non-volatile media or volatile media. Non-volatile media include, for example, optical and/or magnetic disks, such as the storage device(s) **510**. Volatile media include, without limitation, dynamic memory, such as the working memory **514**.

Common forms of physical and/or tangible computer-readable media include, for example, a floppy disk, a flexible disk, hard disk, magnetic tape, or any other magnetic medium, a CD-ROM, any other optical medium, punchcards, papertape, any other physical medium with patterns of holes, a RAM, a PROM, EPROM, a FLASH-EPROM, any other memory chip or cartridge, or any other medium from which a computer can read instructions and/or code.

Various forms of computer-readable media may be involved in carrying one or more sequences of one or more instructions to the processor(s) **504** for execution. Merely by way of example, the instructions may initially be carried on a magnetic disk and/or optical disc of a remote computer. A remote computer might load the instructions into its dynamic memory and send the instructions as signals over a transmission medium to be received and/or executed by the computer system **500**.

The communications subsystem **512** (and/or components thereof) generally will receive signals, and the bus **502** then might carry the signals (and/or the data, instructions, etc. carried by the signals) to the working memory **514**, from which the processor(s) **504** retrieves and executes the instructions. The instructions received by the working memory **514** may optionally be stored on a non-transitory storage device **510** either before or after execution by the processor(s) **504**.

The methods, systems, and devices discussed above are examples. Various configurations may omit, substitute, or add various method steps or procedures, or system components as appropriate. For instance, in alternative configurations, the methods may be performed in an order different from that described, and/or various stages may be added, omitted, and/or combined. Also, features described with respect to certain configurations may be combined in various other configurations. Different aspects and elements of the configurations may be combined in a similar manner. Also, technology evolves and, thus, many of the elements are examples and do not limit the scope of the disclosure or claims.

Specific details are given in the description to provide a thorough understanding of example configurations (including implementations). However, configurations may be practiced without these specific details. For example, well-known circuits, processes, algorithms, structures, and techniques have been shown without unnecessary detail in order to avoid obscuring the configurations. This description provides example configurations only, and does not limit the scope, applicability, or configurations of the claims. Rather, the preceding description of the configurations will provide those skilled in the art with an enabling description for implementing described techniques. Various changes may be made in the function and arrangement of elements without departing from the spirit or scope of the disclosure.

Also, configurations may be described as a process which is depicted as a flow diagram or block diagram. Although each may describe the operations as a sequential process, many of the operations can be performed in parallel or concurrently. In addition, the order of the operations may be rearranged. A process may have additional steps not included in the figure. Furthermore, examples of the methods may be implemented by hardware, software, firmware, middleware, microcode, hardware description languages, or any combination thereof. When implemented in software, firmware, middleware, or microcode, the program code or code segments to perform the necessary tasks may be stored in a non-transitory computer-readable medium such as a storage medium. Processors may perform the described tasks.

Furthermore, the example embodiments described herein may be implemented as logical operations in a computing device in a networked computing system environment. The logical operations may be implemented as any combination of: (i) a sequence of computer implemented instructions, steps, or program modules running on a computing device; and (ii) interconnected logic or hardware modules running within a computing device.

Although the subject matter has been described in language specific to structural features and/or methodological acts, it is to be understood that the subject matter defined in the appended claims is not necessarily limited to the specific features or acts described above. Rather, the specific features and acts described above are disclosed as example forms of implementing the claims.

## Claims

1. A method for generating a Long Term Evolution, LTE, network return procedure, **characterized by** comprising:
initiating, by a mobile terminal (202), connection of the mobile terminal to an LTE network;
receiving, by the mobile terminal (202) from the LTE network, at least one of a first listing (216) and a second listing (218), the first listing (216) specifying a network-wide selection of LTE network access points, and the second listing (218) specifying a set of LTE network access points of the first listing (216);
initiating, by the mobile terminal (202), connection of the mobile terminal (202) to a circuit-switched network, CSN, for access to a particular circuit-switched service;
determining, by the mobile terminal (202) while connected to the CSN, availability of a third listing of LTE network access points (220) supplied by the CSN;
measuring, by the mobile terminal (202) while connected to the CSN, signal strength of at least one LTE network access point selected from one of the first listing (216), the second listing (218), and the third listing (220);
initiating disconnection of the mobile terminal (202) from the CSN for discontinued access to the particular circuit-switched service; and
generating, by the mobile terminal (202) in absence of redirection instruction from the CSN, a packet-switched network return procedure that, when instantiated by the mobile terminal (202), implements connection of the mobile terminal (202) to the LTE network based on the measured signal strength of the at least one LTE network access point.

2. The method of claim 1, further comprising initiating connection of the mobile terminal (202) to the LTE network for access to a particular packet-switched service.

3. The method of claim 1, further comprising initiating disconnection of the mobile terminal (202) from the CSN by the mobile terminal (202).

4. The method of claim 1, further comprising initiating disconnection of the mobile terminal (202) from the CSN by the CSN.

5. The method of claim 1, further comprising the third listing (220) specifying a subset of LTE network access points of the first listing (216).

6. The method of claim 1, further comprising receiving, by the mobile terminal (202) from the PSN, the first listing (216) specifying the network-wide selection of LTE network access points.

7. The method of claim 1, further comprising receiving, by the mobile terminal (202) from the PSN, the second listing (218) specifying the set of LTE network access points of the first listing (216).

8. The method of claim 1, further comprising the set of LTE network access points of the first listing (216) each being associated with a geographic location of the mobile terminal (202) while connected to the LTE network.

9. The method of claim 1, further comprising the mobile terminal (202) initiating connection to the CSN based upon one of a mobile originating call and a mobile terminating call.

10. The method of claim 1, further comprising the mobile terminal (202) being in an operating state, prior to initiating connection to the CSN, selected from an idle mode and active mode.

11. The method of claim 1, further comprising the mobile terminal (202) initiating connection to the LTE network upon a power-on event of the mobile terminal (202).

12. The method of claim 1, further comprising establishing connection of the mobile terminal (202) to the CSN based upon a circuit-switched fallback algorithm.

13. The method of claim 1, further comprising further comprising the set of LTE network access points of the third listing (220) each being associated with a geographic location of the mobile terminal (202) while connected to the CSN.

14. The method of claim 1, further comprising selecting the at least one LTE network access point from the third listing (220).

15. The method of claim 1, further comprising selecting the at least one LTE network access point according to predefined priority, wherein the third listing is of greater priority than the first listing (216), and the first listing (216) is of greater priority than the second listing (218).

16. The method of claim 1, further comprising: receiving the redirection instruction from the CSN; and implementing connection of the mobile terminal (202) to the LTE network based on the redirection instruction.

17. The method of claim 1, further comprising implementing connection of the mobile terminal (202) to the LTE network based on the measured signal strength of the at least one LTE network access point.

18. A multi-mode mobile user equipment (202) for generating a Long Term Evolution, LTE, network return procedure, **characterized by** comprising:
means for initiating connection of the multi-mode mobile user equipment (202) to the LTE network;
means for receiving, from the LTE network, at least one of a first listing (216) and a second listing (218), the first listing (216) specifying a network-wide selection of LTE network access points, and the second listing (218) specifying a set of LTE network access points of the first listing (216);
means for initiating connection of the multi-mode mobile user equipment (202) to a circuit-switched network, CSN, for access to a particular circuit-switched service;
means for determining, while connected to the CSN, availability of a third listing of LTE network access points (220) supplied by the CSN;
means for measuring, while connected to the CSN, signal strength of at least one LTE network access point selected from one of the first listing (216), the second listing (218), and the third listing (220);
means for initiating disconnection of the multi-mode mobile user equipment (202) from the CSN for discontinued access to the particular circuit-switched service; and
means for generating, in absence of redirection instruction from the CSN, a packet-switched network return procedure that, when instantiated by the multi-mode mobile user equipment (202), implements connection of the multi-mode mobile user equipment (202) to the LTE network based on the measured signal strength of the at least one LTE network access point.

## Patentansprüche

1. Verfahren zum Erzeugen einer Long Term Evolution-, LTE, Netzwerkrückkehrprozedur, **dadurch gekennzeichnet, dass** diese umfasst:
Initiierten, durch ein Mobilterminal (202), einer Verbindung des Mobilterminals mit einem LTE-Netzwerk;
Empfangen, durch das Mobilterminal (202) von dem LTE-Netzwerk, zumindest eines von einem ersten Listing (216) und einem zweiten Listing (218), wobei das erste Listing (216) eine netzwerkweite Auswahl von LTE-Netzwerkzugriffspunkten spezifiziert, und das zweite Listing (218) eine Menge von LTE-Netzwerkzugriffspunkten des ersten Listings (216) spezifiziert;
Initiieren, durch das Mobilterminal (202), einer Verbindung des Mobilterminals (202) mit einem leitungsvermittelten Netzwerk, CSN, zum Zugriff auf einen bestimmten leitungsvermittelten Dienst;
Bestimmen, durch das Mobilterminal (202), während der Verbindung mit dem CSN, der Verfügbarkeit eines dritten Listings von LTE-Netzwerkzugriffspunkten (220), das durch das CSN bereitgestellt wird;
Messen, durch das Mobilterminal (202), während der Verbindung mit dem CSN, einer Signalstärke von zumindest einem LTE-Netzwerkzugriffspunkt, der aus einem von dem ersten Listing (216), dem zweiten Listing (218) und dem dritten Listing (220) ausgewählt ist;
Initiieren einer Verbindungstrennung des Mobilterminals (202) von dem CSN zur Unterbrechung des Zugriffs auf den bestimmten leitungsvermittelten Dienst; und
Erzeugen, durch das Mobilterminal (202) in Abwesenheit einer Umleitanweisung von dem CSN, einer paketvermittelten Netzwerkrückkehrprozedur, die, wenn sie durch das Mobilterminal (202) instanziiert wird, eine Verbindung des Mobilterminals (202) mit dem LTE-Netzwerk basierend auf der gemessenen Signalstärke des zumindest einen LTE-Netzwerkzugriffspunkts implementiert.

2. Verfahren nach Anspruch 1, des Weiteren umfassend ein Initiieren einer Verbindung des Mobilterminals (202) mit dem LTE-Netzwerk zum Zugriff auf einen bestimmten paketvermittelten Dienst.

3. Verfahren nach Anspruch 1, des Weiteren umfassend ein Initiierten einer Verbindungstrennung des Mobilterminals (202) von dem CSN durch das Mobilterminal (202).

4. Verfahren nach Anspruch 1, des Weiteren umfassend ein Initiieren einer Verbindungstrennung des Mobilterminals (202) von dem CSN durch das CSN.

5. Verfahren nach Anspruch 1, des Weiteren umfassend, dass das dritte Listing (220) eine Untermenge der LTE-Netzwerkzugriffspunkte des ersten Listings (216) spezifiziert.

6. Verfahren nach Anspruch 1, des Weiteren umfassend ein Empfangen, durch das Mobilterminal (202), von dem paketvermittelten Netzwerk, PSN, des ersten Listings (216), das die netzwerkweite Auswahl von LTE-Netzwerkzugriffspunkten spezifiziert.

7. Verfahren nach Anspruch 1, des Weiteren umfassend ein Empfangen, durch das Mobilterminal (202), von dem paketvermittelten Netzwerk, PSN, des zweiten Listings (218), das die Menge von LTE-Netzwerkzugriffspunkten des ersten Listings (216) spezifiziert.

8. Verfahren nach Anspruch 1, des Weiteren umfassend, dass die Menge von LTE-Netzwerkzugriffspunkten des ersten Listings (216) jeweils mit einer geografischen Position des Mobilterminals (202), während der Verbindung mit dem CSN, assoziiert ist.

9. Verfahren nach Anspruch 1, des Weiteren umfassend, dass das Mobilterminal (202) eine Verbindung mit dem CSN basierend auf einem von einem Mobilbegründungsanruf und einem Mobilbeendungsanruf hin initiiert.

10. Verfahren nach Anspruch 1, des Weiteren umfassend, dass sich das Mobilterminal (202) vor dem Initiieren der Verbindung mit dem CSN in einem Betriebszustand befindet, der aus einem Ruhezustand und einem aktiven Zustand ausgewählt ist.

11. Verfahren nach Anspruch 1, des Weiteren umfassend, dass das Mobilterminal (202) die Verbindung mit dem LTE-Netzwerk auf ein Einschaltereignis des Mobilterminals (202) hin initiiert.

12. Verfahren nach Anspruch 1, des Weiteren umfassend einen Aufbau einer Verbindung des Mobilterminals (202) mit dem CSN basierend auf einem leitungsvermittelten Rückfallalgorithmus hin.

13. Verfahren nach Anspruch 1, des Weiteren umfassend, dass die Menge von LTE-Netzwerkzugriffspunkten des dritten Listings (220) jeweils mit einer geografischen Position des Mobilterminals (202), während der Verbindung mit dem CSN, assoziiert ist.

14. Verfahren nach Anspruch 1, des Weiteren umfassend ein Auswählen des zumindest einen LTE-Netzwerkzugriffspunkts aus dem dritten Listing (220).

15. Verfahren nach Anspruch 1, des Weiteren umfassend ein Auswählen des zumindest einen LTE-Netzwerkzugriffspunkts gemäß einer vordefinierten Priorität, wobei das dritte Listing eine höhere Priorität hat als das erste Listing (216), und das erste Listing (216) eine höhere Priorität hat als das zweite Listing (218).

16. Verfahren nach Anspruch 1, des Weiteren umfassend: Empfangen einer Umleitanweisung von dem CSN; und Implementieren einer Verbindung des Mobilterminals (202) mit dem LTE-Netzwerk basierend auf der Umleitanweisung.

17. Verfahren nach Anspruch 1, des Weiteren umfassend ein Implementieren der Verbindung des Mobilterminals (202) mit dem LTE-Netzwerk basierend auf der gemessenen Signalstärke des zumindest einen LTE-Netzwerkzugriffspunkts.

18. Mehr-Modus-Mobilnutzergerät (202) zum Erzeugen einer Long Term Evolution-, LTE, Netzwerkrückkehrprozedur, umfassend:
Mittel zum Initiieren einer Verbindung des Mehr-Modus-Mobilnutzergeräts (202) mit dem LTE-Netzwerk;
Mittel zum Empfangen, von dem LTE-Netzwerk, zumindest eines von einem ersten Listing (216) und einem zweiten Listing (218), wobei das erste Listing (216) eine netzwerkweite Auswahl von LTE-Netzwerkzugriffspunkten spezifiziert, und das zweite Listing (218) eine Menge von LTE-Netzwerkzugriffspunkten des ersten Listings (216) spezifiziert;
Mittel zum Initiierten einer Verbindung des Mehr-Modus-Mobilnutzergeräts (202) mit einem leitungsvermittelten Netzwerk, CSN, zum Zugriff auf einen bestimmten leitungsvermittelten Dienst;
Mittel zum Bestimmen, während der Verbindung mit dem CSN, einer Verfügbarkeit eines dritten Listings (220) von LTE-Netzwerkzugriffspunkten, das durch das CSN bereitgestellt wird;
Mittel zum Messen, während der Verbindung mit dem CSN, einer Signalstärke von zumindest einem LTE-Netzwerkzugriffspunkt, der aus einem von dem ersten Listing (216), dem zweiten Listing (218) und dem dritten Listing (220) ausgewählt ist;
Mittel zum Initiieren einer Verbindungstrennung des Mehr-Modus-Mobilnutzergeräts (202) von dem CSN zur Unterbrechung des Zugriffs auf den bestimmten leitungsvermittelten Dienst; und
Mittel zum Erzeugen, in Abwesenheit einer Umleitanweisung von dem CSN, einer paketvermittelten Netzwerkrückkehrprozedur, die, wenn sie durch das Mehr-ModusMobilnutzergerät (202) instantiiert wird, eine Verbindung des Mehr-Modus-Mobilnutzergeräts (202) mit dem LTE-Netzwerk basierend auf der gemessenen Signalstärke des zumindest einen LTE-Netzwerkzugriffspunkts implementiert.

## Revendications

1. Procédé de création d'une procédure de retour de réseau à évolution à long terme, LTE, **caractérisé en ce qu'**il comprend :
déclencher, par un terminal (202) mobile, une connexion du terminal mobile à un réseau LTE ;
recevoir, par le terminal (202) mobile du réseau LTE, au moins une première énumération (216) et une deuxième énumération (218), la première énumération (216) précisant une sélection dans tout le réseau de points d'accès du réseau LTE et la deuxième énumération (218) précisant un jeu de points d'accès du réseau LTE de la première énumération (216) ;
déclencher, par le terminal (202) mobile, une connexion du terminal (202) mobile à un réseau à commutation par circuit, CSN, pour accéder à un service particulier à commutation par circuit ;
déterminer, par le terminal (202) mobile, alors qu'il est connecté au CSN, la disponibilité d'une troisième énumération (220) de points d'accès du réseau LTE fournie par le CSN ;
mesurer, par le terminal (202) mobile, alors qu'il est connecté au CSN, une force de signal d'au moins un point d'accès du réseau LTE sélectionné parmi l'un de la première énumération (216), de la deuxième énumération (218) et de la troisième énumération (220) ;
déclencher une déconnexion du terminal (202) mobile du CSN pour cesser d'accéder au service particulier à commutation par circuit et
créer, par le terminal (202) mobile, en l'absence d'une instruction de réacheminement du CSN, une procédure de retour du réseau à commutation par paquet, qui, quand elle est instanciée par le terminal (202) mobile, met en oeuvre une connexion du terminal (202) mobile au réseau LTE sur la base de la force du signal mesurée du au moins un point d'accès du réseau LTE.

2. Procédé suivant la revendication 1, comprenant, en outre, déclencher une connexion du terminal (202) mobile au réseau LTE pour accéder à un service particulier à commutation par paquet.

3. Procédé suivant la revendication 1, comprenant, en outre, déclencher une déconnexion du terminal (202) mobile du CSN par le terminal (202) mobile.

4. Procédé suivant la revendication 1, comprenant, en outre, déclencher une déconnexion du terminal (202) mobile du CSN par le CSN.

5. Procédé suivant la revendication 1, comprenant, en outre, le fait que la troisième énumération (220) précise un sous-jeu de points d'accès du réseau LTE de la première énumération (216).

6. Procédé suivant la revendication 1, comprenant, en outre, recevoir, par le terminal (202) mobile du CSN, la première énumération (216) précisant la sélection dans tout le réseau de points d'accès au réseau LTE.

7. Procédé suivant la revendication 1, comprenant, en outre, recevoir, par le terminal (202) mobile du CSN, la deuxième énumération (218) précisant le jeu de points d'accès du réseau LTE de la première énumération (216).

8. Procédé suivant la revendication 1, comprenant, en outre, le fait que le jeu de points d'accès du réseau LTE de la première énumération (216) est associé à une localisation géographique du terminal (202) mobile, alors qu'il est connecté au réseau LTE.

9. Procédé suivant la revendication 1, comprenant, en outre, le fait que le terminal (202) mobile déclenche une connexion au CSN sur la base d'un appel d'origine du mobile et d'un appel de fin du mobile.

10. Procédé suivant la revendication 1, comprenant, en outre, le fait que le terminal (202) mobile est dans un état de fonctionnement avant le déclenchement d'une connexion au CSN choisi parmi un mode de repos et un mode de fonctionnement.

11. Procédé suivant la revendication 1, comprenant, en outre, le fait que le terminal (202) mobile déclenche une connexion au réseau LTE, après un événement de mise sous tension du terminal (202) mobile.

12. Procédé suivant la revendication 1, comprenant, en outre, le fait d'établir une connexion du terminal (202) mobile au CSN sur la base d'un algorithme de retombée à commutation par circuit.

13. Procédé suivant la revendication 1, comprenant, en outre, le fait que le jeu de points d'accès du réseau LTE de la troisième énumération (220) est associé à une localisation géographique du terminal (202) mobile, alors qu'il est connecté au CSN.

14. Procédé suivant la revendication 1, comprenant, en outre, sélectionner le au moins un point d'accès du réseau LTE dans la troisième énumération (220).

15. Procédé suivant la revendication 1, comprenant, en outre, sélectionner le au moins un point d'accès du réseau LTE suivant une priorité définie à l'avance, la troisième énumération ayant une priorité plus grande que la première énumération (216) et la première énumération (216) ayant une priorité plus grande que la deuxième énumération (218).

16. Procédé suivant la revendication 1, comprenant, en outre : recevoir l'instruction de réacheminement du CSN et mettre en oeuvre une connexion du terminal (202) mobile au réseau LTE sur la base de l'instruction de réacheminement.

17. Procédé suivant la revendication 1, comprenant, en outre, la mise en oeuvre d'une connexion du terminal (202) mobile au réseau LTE sur la base de la force du signal mesuré du au moins un point d'accès du réseau LTE.

18. Equipement (202) d'utilisateur mobile multimode pour créer une procédure de retour du réseau à évolution à long terme, LTE, **caractérisé en ce qu'**il comprend :
des moyens de déclenchement d'une connexion de l'équipement (202) d'utilisateur mobile multimode au réseau LTE ;
des moyens de réception du réseau LTE d'au moins une première énumération (216) et d'une deuxième énumération (218), la première énumération (216) précisant une sélection dans tout le réseau de points d'accès du réseau LTE et la deuxième énumération (218) précisant un jeu de points d'accès du réseau LTE de la première énumération (216) ;
des moyens de déclenchement d'une connexion de l'équipement (202) d'utilisateur mobile multimode à un réseau à commutation par circuit CSN pour accéder à un service particulier à commutation par circuit ;
des moyens de détermination, alors qu'il est connecté au CSN, de la disponibilité d'une troisième énumération (220) de points d'accès du réseau LTE fournie par le CSN ;
des moyens de mesure, alors qu'il est connecté au CSN, de la force du signal d'au moins un point d'accès du réseau LTE sélectionné parmi l'une de la première énumération (216), de la deuxième énumération (218) et de la troisième énumération (220) ;
des moyens pour déclencher une déconnexion de l'équipement (202) d'utilisateur mobile multimode du CSN, pour faire cesser l'accès au service particulier à commutation par circuit et
des moyens de création, en l'absence d'une instruction de réacheminement du CSN, une procédure de retour du réseau à commutation par paquet, qui, lorsqu'elle est instanciée par l'équipement (202) d'utilisateur mobile multimode, met en oeuvre une connexion de l'équipement (202) d'utilisateur mobile multimode au réseau LTE sur la base de la force du signal mesuré du au moins un point d'accès du réseau LTE.
